# EUROPEAN PATENT APPLICATION

(11) **EP 3 007 040 A1**
(43) Date of publication of application: **13.04.2016**
(21) Application number: 14808063.3
(22) Date of filing: 09.05.2014
(51) Int. Cl.: G06F 3/03, G06F 3/041

(54) **TOUCHSCREEN INPUT METHOD AND APPARATUS**

(30) Priority: 03.06.2013 KR 20130063580
(71) Applicant: Won, Hyuk, Busan 601-821 (KR)
(72) Inventor: PARK, Gwan Soo, Busan 611-766 (KR); KIM, Hui Min, Busan 609-836 (KR)
(74) Representative: Bongiovanni, Simone
(86) International application number: PCT/KR2014/004128
(87) International publication number: WO 2014/196743

(57) **Abstract**

The present invention relates to a touchscreen input method. The objective of the present invention is to implement a touch interface using intuitive vision through simple use of a pop-up menu and an accurate pointing function and selection using a cursor on a screen. The present invention may comprise the steps of: sensing a first touch on a first point and a second touch on a second point which simultaneously occur on the touch screen; displaying a cursor in a location between the first point and the second point; displaying the cursor while moving the cursor when both the first touch and the second touch move without disappearing from the touchscreen; and performing a predetermined operation if, after the touch screen has been touched by the first touch and the second touch, the first touch disappears and then again occurs on the touchscreen.

## Description

### Technical Field

Example embodiments relate to a touchscreen input method and apparatus, and more particularly, to a method and apparatus for providing an efficient interface on a touchscreen.

### Background Art

With conveniences and propagation of smart devices, users have been using various multimedia services without restrictions on time and location. To attract more users, manufacturers have been competitively developing a terminal having advanced functions such as a touchscreen type mobile terminal. The touchscreen type mobile terminal is technically characterized in easy and simple touch input with a pen or a hand of a user.

Korea Patent Laid-open Publication No. 2013-0023948 relates to a method and apparatus for selecting an icon in a portable terminal and proposes technology for selecting an icon through one touch moving of a cursor in a state of gripping with one hand.

In related arts, during a web surfing in a smart device based on a general touchscreen input method, another post may be touched although a user is to touch a web post or a tag connected through hypertext. Additionally, since an accurate touch pointing spot is absent, the post or the tag may not move although the post or the tag is selected. Also, due to an additional issue of a current touch interface, the user may experience inconvenience in using a selecting function. In a general interface, a pop-up menu may be displayed when a predetermined period of time elapses after a touch is input, and the user may select and touch a desired menu. Subsequently, a size of an area may be selected by touching again after adjusting a position of an additional cursor displayed. Another touch may need to be performed for a predetermined period of time to edit the selected area.

### Disclosure of Invention

### Technical Goals

An aspect provides a method of improving an interface issue related to a touch input method by applying an input function of a mouse for a computer to a smart device based on a touchscreen input method.

### Technical solutions

According to an aspect, there is provided a touchscreen apparatus including a touchscreen, a touchscreen sensor configured to sense a first touch and a second touch on the touchscreen, a determiner configured to determine whether the first touch and the second touch are simultaneously performed on the touchscreen, and a display configured to display a cursor located between a location of the first touch and a location of the second touch when the first touch and the second touch are simultaneously performed on the touchscreen.

The determiner may be configured to determine whether the first touch and the second touch move without departing from the touchscreen, and the display may be configured to display the cursor on the touchscreen by moving the cursor in response to movements of the first touch and the second touch when the first touch and the second touch move without departing from the touchscreen.

When the first touch is in contact with the touchscreen, the first touch may be located leftward relative to the second touch, the determiner may be configured to determine whether the first touch and the second touch are in contact with the touchscreen, the second touch departs from the touch screen, and the second touch comes into contact with the touchscreen again, and the touchscreen apparatus may further include a controller configured to generate a click event at a point of the cursor when the first touch and the second touch are in contact with the touchscreen, the second touch departs from the touch screen, and comes into in contact with the touchscreen again.

When the first touch is in contact with the touchscreen, the first touch may be located leftward relative to the second touch, the determiner may be configured to determine whether the first touch and the second touch are in contact with the touchscreen, the second touch departs from the touch screen, and the second touch comes into contact with the touchscreen again, and the touchscreen apparatus may further include a controller configured to activate a pop-up menu when the first touch and the second touch are in contact with the touchscreen, the second touch departs from the touch screen, and comes into in contact with the touchscreen again.

When the first touch is in contact with the touchscreen, the first touch may be located leftward relative to the second touch, the determiner may be configured to determine whether the second touch is dragged on the touchscreen in a state in which the first touch departs from the touchscreen after contacting the touchscreen, and the display may be configured to display an area corresponding to the dragging, starting from a position indicated by a cursor as a selected area based on a first display method when the second touch is dragged on the touchscreen in the state in which the first touch departs from the touchscreen.

The determiner may be configured to determine whether the first touch is dragged on the touchscreen in a state in which the second touch departs from the touchscreen after contacting the touchscreen, and the display may be configured to display an area corresponding to the dragging, starting from a position indicated by a cursor as a selected area based on a second display method when the first touch is dragged on the touchscreen in the state in which the second touch departs from the touchscreen.

The first display method may differ from the second display method.

According to another aspect, there is also provided a touchscreen input method including sensing a first touch on a first point and a second touch on a second point simultaneously performed on the touchscreen, and displaying a cursor located between the first point and the second point when the first touch and the second touch are sensed simultaneously.

The touchscreen input method may further include determining whether the first touch and the second touch move without departing from the touchscreen and displaying the cursor on the touchscreen by moving the cursor in response to movements of the first touch and the second touch when the first touch and the second touch move without departing from the touchscreen.

The touchscreen input method may further include determining whether the first touch and the second touch are in contact with the touchscreen, the second touch departs from the touch screen, and comes into contact with the touchscreen again, and performing a predetermined operation when the first touch and the second touch are in contact with the touchscreen, the second touch departs from the touch screen, and comes into contact with the touchscreen again.

The performing of the predetermined operation when the first touch and the second touch are in contact with the touchscreen, the second touch departs from the touch screen, and comes into contact with the touchscreen again may include allowing a click event to occur at a point of the cursor when the first touch is located leftward relative to the second touch.

The performing of the predetermined operation when the first touch and the second touch are in contact with the touchscreen, the second touch departs from the touch screen, and comes into contact with the touchscreen again may include activating a pop-up menu when the first touch is located rightward relative to the second touch.

The touchscreen input method may further include determining whether the second touch is dragged on the touchscreen in a state in which the first touch departs from the touchscreen after contacting the touchscreen and displaying an area corresponding to the dragging, starting from a position indicated by a cursor as a selected area based on a first display method when the second touch is dragged on the touchscreen in the state in which the first touch departs from the touchscreen, wherein when the first touch is in contact with the touchscreen, the first touch is located leftward relative to the second touch.

The touchscreen input method may further include determining whether the first touch is dragged on the touchscreen in a state in which the second touch departs from the touchscreen after contacting the touchscreen, and displaying an area corresponding to the dragging, starting from a position indicated by a cursor as a selected area based on a second display method when the first touch is dragged on the touchscreen in the state in which the second touch departs from the touchscreen.

The first display method may differ from the second display method.

According to still another aspect, there is also provided a non-transitory computer-readable storage medium storing instructions to cause a computer to perform the method of any one of claims 1 though 8.

### Advantageous Effects

According to an example embodiment, it is possible to implement a touch interface based on an intuitive perspective and improve an issue of a touch input method that depends on an individual sense for each user of a general smart device through a simple utilization of a pop-up menu and an accurate selection based on an accurate pointing function of a cursor on a screen.

### Brief Description of Drawings

FIG. 1 is a block diagram illustrating a configuration of a touchscreen apparatus according to an example embodiment.
FIG. 2 illustrates an example of displaying a cursor in a touchscreen apparatus according to an example embodiment.
FIG. 3 illustrates a cursor moving in a touchscreen apparatus according to an example embodiment.
FIG. 4 illustrates a click event occurring based on a first touch in a touchscreen apparatus according to an example embodiment.
FIG. 5 illustrates an example of activating a pop-up menu based on a second touch in a touchscreen apparatus according to an example embodiment.
FIG. 6 illustrates an example of dragging an area based on a first display method in a touchscreen apparatus according to an example embodiment.
FIG. 7 illustrates an example of selecting an area based on a second display method in a touchscreen apparatus according to an example embodiment.
FIG. 8 is a flowchart illustrating an input method of displaying and moving a cursor in a touchscreen apparatus according to an example embodiment.
FIG. 9 is a flowchart illustrating a click and drag input method in a touchscreen apparatus according to an example embodiment.
FIG. 10 illustrates operations of a user and a touchscreen apparatus according to an example embodiment.

### Best Mode for Carrying Out the Invention

Hereinafter, some example embodiments will be described in detail with reference to the accompanying drawings.

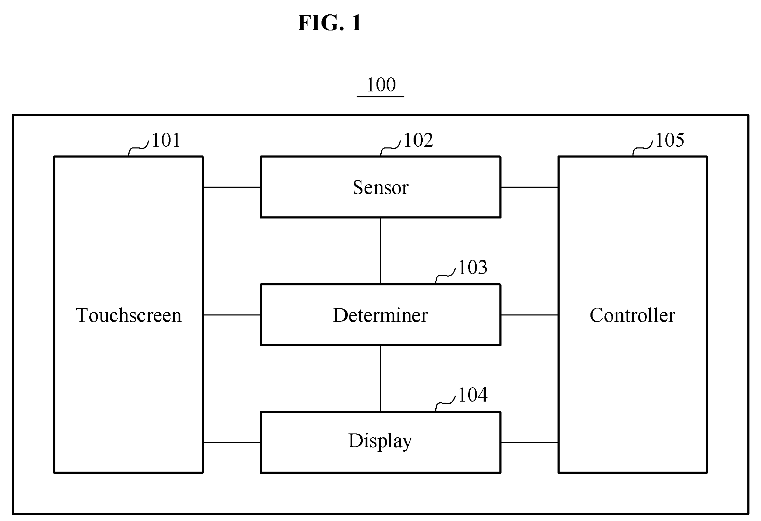

FIG. 1 is a block diagram illustrating a configuration of a touchscreen apparatus according to an example embodiment.

A touchscreen apparatus 100 may include a touchscreen 101, a sensor 102, a determiner 103, a display 104, and a controller 105. The touchscreen 101 may be configured to perform a predetermined processing through stored software by recognizing a predetermined position, for example, a portion indicating a text on a screen without need to use a keyboard when a user touches the predetermined position with a hand. Thus, when a user touches text or image information displayed on a screen including a touch panel with a finger, an item selected by the user may be recognized based on a touched position on the screen and a command corresponding to the recognized item may be processed by a computer such that the user acquires desired information.

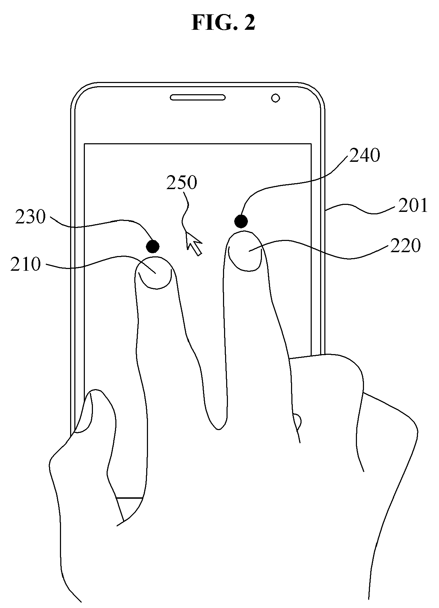

The sensor 102 may sense a first touch and a second touch on the touchscreen 101. In an example of FIG. 2, a user may touch a touchscreen 201 with an index finger 210 and a middle finger 220 of a right hand. In this example, the sensor 102 may sense a touch 230 of the index finger 210 on the touchscreens 101 and 201. Also, the sensor 102 may sense a touch 240 of the middle finger 220 on the touchscreens 101 and 201.

The determiner 103 may determine whether the first touch and the second touch are simultaneously performed on the touchscreen 101. In an example of FIG. 2, when the user touches the touchscreen 201 with the index finger 210 and the middle finger 220, the determiner 103 may determine whether the touch 230 of the index finger 210 and the touch 240 of the middle finger 220 are performed simultaneously.

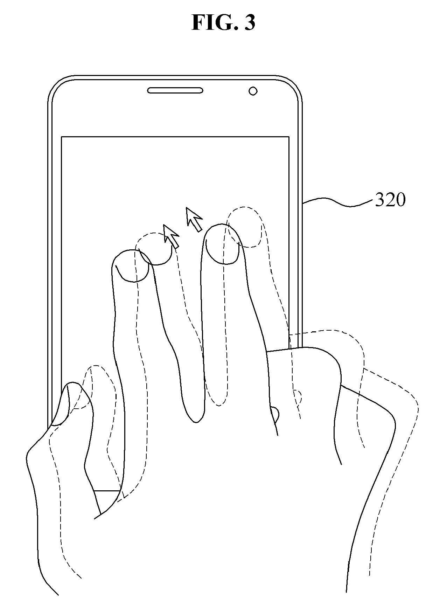

The determiner 103 may determine whether the first touch and the second touch move without departing from the touchscreen 101. As an example, referring to FIG. 2 or FIG. 3, the determiner 103 may determine whether the user moves the index finger 210 and the middle finger 220 without detaching from the touchscreens 201 and 301.

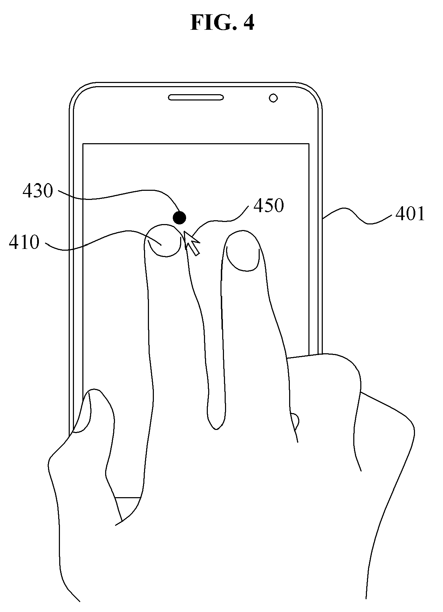

The determiner 103 may determine whether the first touch and the second touch are in contact with the touchscreen 101, the first touch departs from the touchscreen 101, and the first touch is performed again. In this example, when the first touch is in contact with the touchscreen, the first touch may be located leftward relative to the second touch. In an example of FIG. 4, whether a user touches a touchscreen 401 with an index finger and a middle finger of a right hand, detaches an index finger 410 from the touchscreen 401, and performs a touch 430 on the touchscreen 401 may be determined.

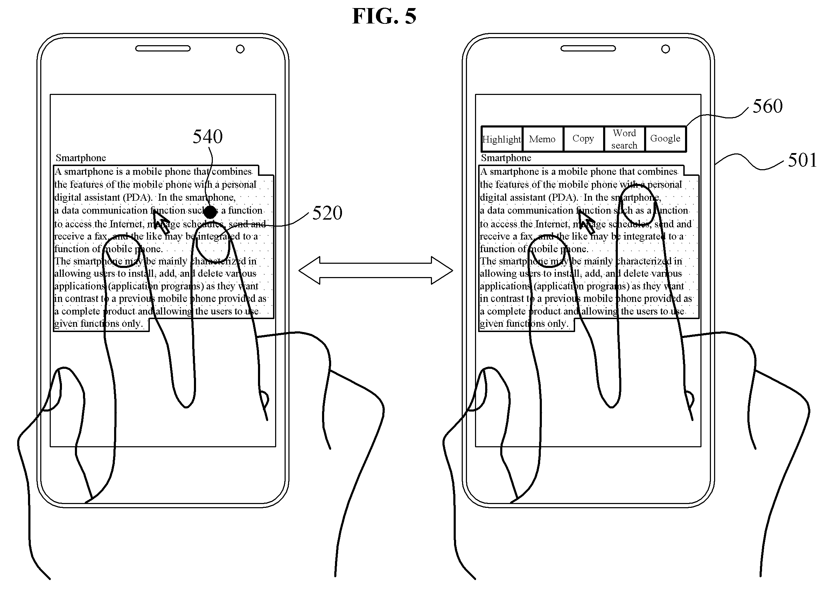

The determiner 103 may determine whether the first touch and the second touch are in contact with the touchscreen, the second touch departs from the touchscreen 101, and the second touch is performed again. In this example, when the second touch is in contact with the touchscreen, the second touch may be located leftward relative to the first touch. In an example of FIG. 5, whether a user touches a touchscreen with an index finger and a middle finger of a right hand, detaches a middle finger 540 from a touchscreen 501, and performs a touch 540 again may be determined.

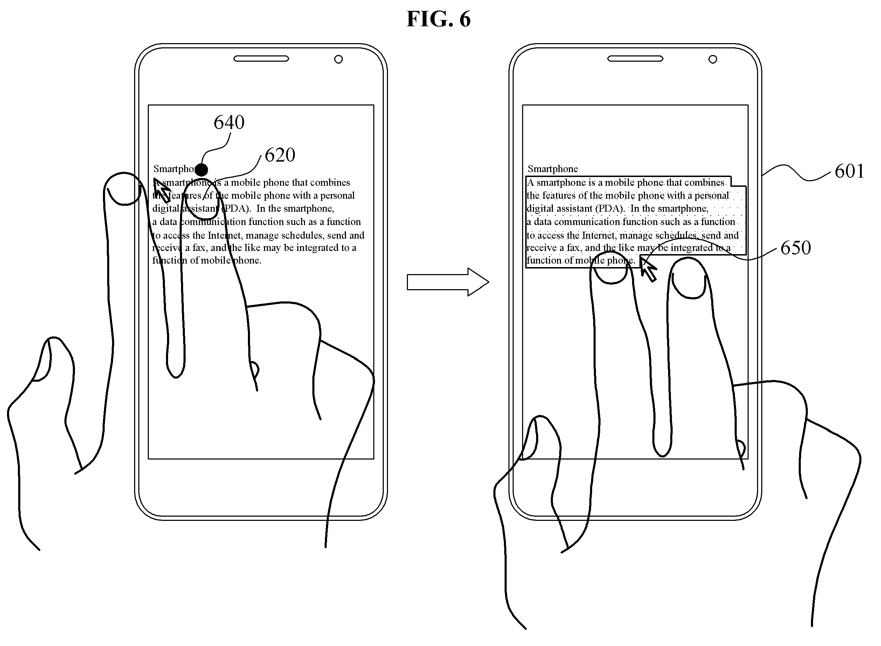

The determiner 103 may determine whether the second touch is dragged on the touchscreen 101 in a state in which the first touch departs from the touchscreen 101 after contacting with the touchscreen. In this example, when the first touch is in contact with the touchscreen, the first touch may be located leftward relative to the second touch. In an example of FIG. 6, whether a user touches a touchscreen with an index finger and a middle finger of a right hand, detaches the index finger from a touchscreen 601, and drags the touchscreen 601 with a middle finger 620 may be determined.

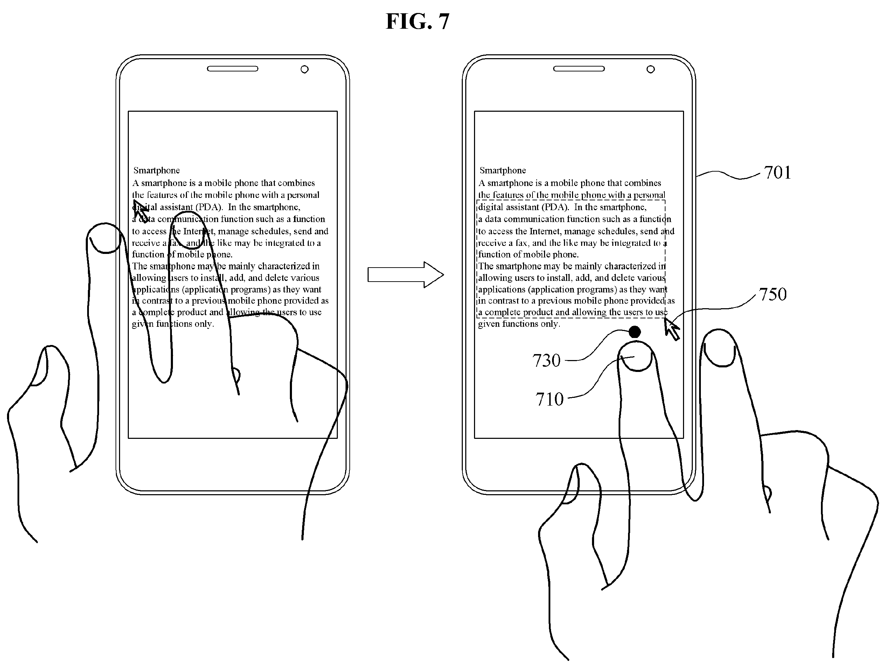

The determiner 103 may determine whether the first touch is dragged on the touchscreen 101 in a state in which the second touch departs from the touchscreen 101 after contacting with the touchscreen. In this example, when the second touch is in contact with the touchscreen, the second touch may be located rightward relative to the first touch. In an example of FIG. 7, whether a user touches a touchscreen 701 with an index finger and a middle finger of a right hand, detaches the middle finger from a touchscreen 701, and drags the touchscreen 701 with an index finger 710 may be determined.

The display 104 may display a cursor located between a location of the first touch and a location of the second touch when the first touch and the second touch are simultaneously performed on the touchscreen 101. In FIG. 2, when the touches 230 and 240 are simultaneously performed on the touchscreen 201 using the index finger 210 and the middle finger 220, a cursor 250 may be displayed between the index finger 210 and the middle finger 220.

When the first touch and the second touch move without departing from the touchscreen 101, the display 104 may display the cursor on the touchscreen by moving the cursor in response to movements of the first touch and the second touch. For example, referring to FIG. 2, when the user touches the touchscreen 201 with the index finger 210 and the middle finger 220 of the right hand, the determiner 103 may determine whether the touch 230 of the index finger 210 and the touch 240 of the middle finger @20 are performed simultaneously such that a movement of the cursor is displayed on the touchscreen in response to the movements of the index finger 210 and the middle finger 220 as illustrated in FIG. 3.

When the second touch is dragged on the touchscreen in the state in which the first touch departs from the touchscreen, the display 104 may display an area corresponding to the dragging, starting from a position indicated by the cursor as a selected area based on a first display method. In this example, when the second touch is in contact with the touchscreen, the second touch may be located rightward relative to the first touch. In an example of FIG. 6, when the user touches the touchscreen with the index finger and the middle finger of the right hand, detaches the index finger from the touchscreen, and drags the touchscreen 601 with the middle finger 620, an area corresponding to the dragging, starting from a position indicated by a cursor 650 may be selected. In this example, the area corresponding to the dragging may be displayed based on the first display method as illustrated in FIG. 6.

When the first touch is dragged on the touchscreen in the state in which the second touch departs from the touchscreen, the display 104 may display an area corresponding to the dragging, starting from a position indicated by the cursor as a selected area based on the second display method. In this example, when the first touch is in contact with the touchscreen, the first touch may be located leftward relative to the second touch. In an example of FIG. 7, when the user touches the touchscreen with the index finger and the middle finger of the right hand, detaches the middle finger from the touchscreen, and drags the touchscreen 701 with the index finger 710, an area corresponding to the dragging, starting from a position indicated by a cursor 750 may be selected. In this example, the area corresponding to the dragging may be displayed based on the second display method as illustrated in FIG. 7.

When the first touch and the second touch are in contact with the touchscreen 101, the first touch departs from the touchscreen 101, and the first touch is performed again, the controller 105 may allow an occurrence of a click event at a point of a cursor. In this example, when the first touch is in contact with the touchscreen, the first touch may be located leftward relative to the second touch. In an example of FIG. 4, when the user touches the touchscreen with the index finger and the middle finger, detaches the index finger 410 from the touchscreen 401, and performs the touch 430 with the index finger 410, a click event may occur at a point of a cursor 450.

When the first touch and the second touch are in contact with the touchscreen 101, the second touch departs from the touchscreen, and the second touch is performed again, the controller 105 may activate a pop-up menu. In this example, when the second touch is in contact with the touchscreen, the second touch may be located rightward relative to the first touch. In an example of FIG. 5, when the user touches the touchscreen with the index finger and the middle finger, detaches the middle finger 520 from the touchscreen 501, and performs the touch 540 with the middle finger 520 again, a pop-up menu 560 may be activated.

According to example embodiments, it is possible to improve an issue of a touch input method by applying an input function of a mouse of a computer to a smart device based on a touchscreen input method. Also, the present disclosure is readily applicable by any user having used the mouse of the computer.

FIG. 2 illustrates an example of displaying a cursor in a touchscreen apparatus according to an example embodiment.

In FIG. 2, a first touch, for example, the touch 230 may be assumed as a touch performed by the user with the index finger 210 of the right hand, and a second touch, for example, the touch 240 may be assumed as a touch performed by the user with the middle finger 220 of the right hand. When the first touch 230 and the second touch 240 are sensed in the touchscreen apparatus and whether the first touch 230 and the second touch 240 are performed simultaneously is determined, the cursor 250 may be displayed between the first touch 230 and the second touch 240. For example, the index finger 210 and the middle finger 220 may be in contact with the touchscreen 201. In this example, in the touchscreen apparatus, a sensor may sense the touch 230 of the index finger 210 and the touch 240 of the middle finger 220 on the touchscreen 201, and a determiner may determine whether the touch 230 of the index finger 210 and the touch 240 of the middle finger 220 are simultaneously performed the touchscreen 201. In this example, in response to a determination that the touch 230 of the index finger 210 and the touch 240 of the middle finger 220 are simultaneously performed the touchscreen 201, a display may display the cursor 250 located between a location of the touch 230 performed by the user with the index finger 210 and a location of the touch 240 performed by the user with the middle finger 220.

FIG. 3 illustrates a cursor moving in a touchscreen apparatus according to an example embodiment.

When a touchscreen input apparatus determines that a first touch and a second touch move on a touchscreen without departing from the touchscreen, a cursor may be displayed while moving in response to movements of the first touch and the second touch. In FIG. 1 or FIG. 2, the user may touch the touchscreen 201 with the index finger 210 and the middle finger 220 of the right hand. In this example, in the touchscreen apparatus, the determiner 103 determines whether the touch 230 of the index finger 210 and the touch 240 of the middle finger 220 move without departing from the touchscreen 201. In response to a determination that the touch 230 of the index finger 210 and the touch 240 of the middle finger 220 move without departing from the touchscreen 201, the display 104 may display the cursor on a touchscreen 320 by moving the cursor in response to the movements of the touch 230 performed by the index finger 210 and the touch 240 performed by the middle finger 220 as illustrated in FIG. 3.

FIG. 4 illustrates a click event occurring based on a first touch in a touchscreen apparatus according to an example embodiment.

In FIG. 4, it is assumed that a first touch is located leftward relative to a second touch when the first touch is in contact with the touchscreen 401. In the touchscreen apparatus, a determiner may determine whether the first touch and the second touch are in contact with a touchscreen, the first touch departs from the touchscreen, and the first touch is performed again. When the first touch and the second touch are in contact with the touchscreen, the first touch departs from the touchscreen, and the first touch is performed again, the controller may allow an occurrence of a clock event at a point of a cursor. As an example, when the user touches the touchscreen 401 with the index finger and the middle finger of the right hand, detaches the index finger 410 from the touchscreen 401, and performs the touch 430 again, a click event may occur at a point of the cursor 450.

Accordingly, it is possible to improve an error that another post is touched by a user intending to touch a web post or a tag connected through hypertext during a web surfing with a smart device based on a general touchscreen input method.

FIG. 5 illustrates an example of activating a pop-up menu based on a second touch in a touchscreen apparatus according to an example embodiment.

When a first touch is in contact with the touchscreen 501, the first touch may be located leftward relative to a second touch. In the touchscreen apparatus, a determiner may determine whether the first touch and the second touch are in contact with the touchscreen, the second touch departs from the touchscreen 501, and the second touch is performed again. When the first touch and the second touch are in contact with the touchscreen 501, the second touch departs from the touchscreen 501, and the second touch is performed again, a controller may activate a pop-up menu. As an example, when the user touches the touchscreen with the index finger and the middle finger of the right hand, detaches the middle finger 520 from the touchscreen 501, and performs the touch 540 again, a pop-up menu 560 may be activated on the touchscreen 501. The pop-up menu 560 may include a function to, for example, highlight, memo, copy, word search, and Googling.

FIG. 6 illustrates an example of dragging an area based on a first display method in a touchscreen apparatus according to an example embodiment.

In FIG. 6, when a first touch signal is in contact with a touchscreen, the first touch signal may be located leftward relative to a second touch signal. In the touchscreen apparatus, a determiner may determine whether the second touch is dragged on the touchscreen in a state in which the first touch departs from the touchscreen after contacting the touchscreen. When the second touch is dragged on the touchscreen in a state in which the first touch departs from the touchscreen, a display may display an area corresponding to the dragging, starting from a position indicated by a cursor as a selected area based on a first display method. In this example, based on the first display method, the area corresponding to the dragging may be indicated by a solid line as illustrated in FIG. 6. As an example, when the user touches the touchscreen with the index finger and the middle finger of the right hand, detaches the index finger from the touchscreen 601, and drags the touchscreen 601 with the middle finger 620, an area corresponding to the dragging, starting from a position indicated by the cursor 650 may be displayed as a selected area.

FIG. 7 illustrates an example of selecting an area based on a second display method in a touchscreen apparatus according to an example embodiment.

In FIG. 7, when a first touch signal is in contact with a touchscreen, the first touch signal may be located leftward relative to a second touch signal. On the touchscreen, a determiner may determine whether the first touch is dragged on the touchscreen in a state in which the second touch departs from the touchscreen after contacting the touchscreen. When the first touch is dragged on the touchscreen in a state in which the second touch departs from the touchscreen, a display may display an area corresponding to the dragging, starting from a position indicated by a cursor as a selected area based on a second display method. In this example, based on the second display method, the area corresponding to the dragging may be indicated by a dashed line as illustrated in FIG. 7. As an example, when the user touches the touchscreen 701 with the index finger and the middle finger of the right hand, detaches the middle finger from the touchscreen 701, and drags the touchscreen 701 with the index finger 710, an area corresponding to the dragging, starting from a position indicated by the cursor 750 may be selected.

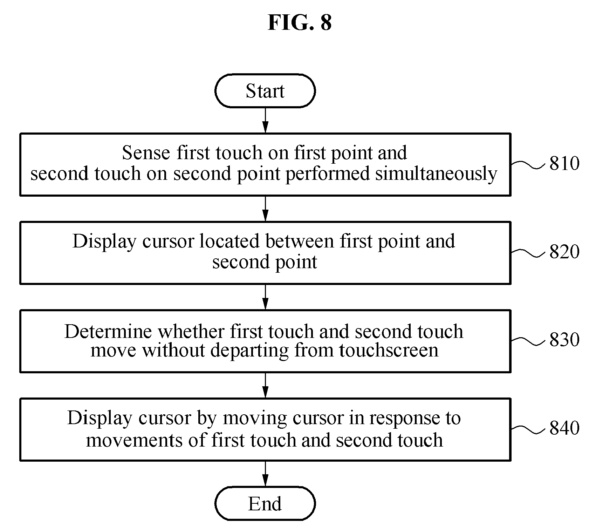

FIG. 8 is a flowchart illustrating an input method of displaying and moving a cursor in a touchscreen apparatus according to an example embodiment.

A touchscreen input method may be performed by the touchscreen apparatus. Since the descriptions provided with reference to FIGS. 1 through 7 are also applicable here, repeated descriptions will be omitted.

In operation 810, the touchscreen apparatus may sense a first touch on a first point and a second touch on a second point simultaneously performed on the touchscreen. In an example of FIG. 2, the touchscreen apparatus may sense touches simultaneously performed on the touchscreen by an index finger and a middle finger of a right hand of a user.

In operation 820, when the first touch and the second touch are simultaneously sensed from the touchscreen, the touchscreen apparatus may display a cursor located between the first point and the second point. As an example, when a touch of the index finger and a touch of the middle finger are simultaneously sensed in operation 810, the cursor may be displayed between the index finger and the middle finger.

In operation 830, the touchscreen apparatus may determine whether the first touch and the second touch move without departing from the touchscreen. In an example of FIG. 3, the touchscreen apparatus may determine whether the index finger and the middle finger move without departing from the touchscreen.

In operation 840, when the first touch and the second touch move without departing from the touchscreen, the touchscreen apparatus may display the cursor on the touchscreen by moving the cursor in response to movements of the first touch and the second touch. In an example of FIG. 3, when the index finger and the middle finger move without departing from the touchscreen, the cursor may be displayed on the touchscreen while moving in response to movements of the index finger and the middle finger.

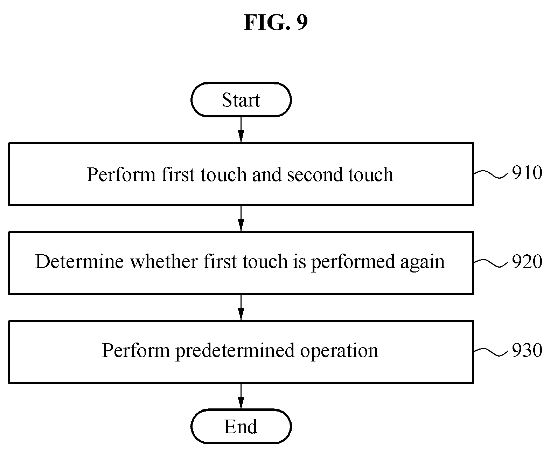

FIG. 9 is a flowchart illustrating a click and drag input method in a touchscreen apparatus according to an example embodiment.

A touchscreen input method may be performed by the touchscreen apparatus.

In operation 910, a first touch and a second touch may be performed on a touchscreen. For example, a user may touch the touchscreen with an index finger and a middle finger of a right hand.

In operation 920, the touchscreen apparatus may determine whether the first touch departs from the touchscreen and is performed again. The first touch may be located leftward relative to the second touch. Alternatively, the first touch may be located rightward relative to the second touch. As an example, the touchscreen apparatus may determine whether the index finger departs from the touchscreen and comes into contact with the touchscreen again. As another example, the touchscreen apparatus may determine whether the middle finger departs from the touchscreen and comes into contact with the touchscreen again.

In operation 930, when the first touch and the second touch are in contact with the touchscreen, the first touch departs from the touch screen, and the first touch comes into contact with the touchscreen again, the touchscreen apparatus performs a predetermined operation.

It is assumed that the user touches the touchscreen with the index finger and the middle finger of the right hand. In an example, when the index finger and the middle finger are in contact with the touchscreen, the index finger departs from the touchscreen, and the index finger comes into contact with the touchscreen again, a clock event may occur at a point indicated by a cursor.

In another example, when the index finger and the middle finger are in contact with the touchscreen, the middle finger departs from the touchscreen, and the middle finger comes into contact with the touchscreen again, a pop-up menu may be activated.

In still another example, when the index finger and the middle finger are in contact with the touchscreen and the middle finger drags the touchscreen while the index finger departs from the touchscreen, an area corresponding to the dragging, starting from a position indicated by the cursor may be selected as illustrated in FIG. 6.

In yet another example, when the index finger and the middle finger are in contact with the touchscreen and the index finger drags the touchscreen while the middle finger departs from the touchscreen, an area corresponding to the dragging, starting from a position indicated by the cursor may be selected as illustrated in FIG. 7.

Accordingly, in contrast to the related arts, it is possible to improve an accuracy of pointing touch and an issue of setting predetermined section and area by performing an operation using two fingers of a user.

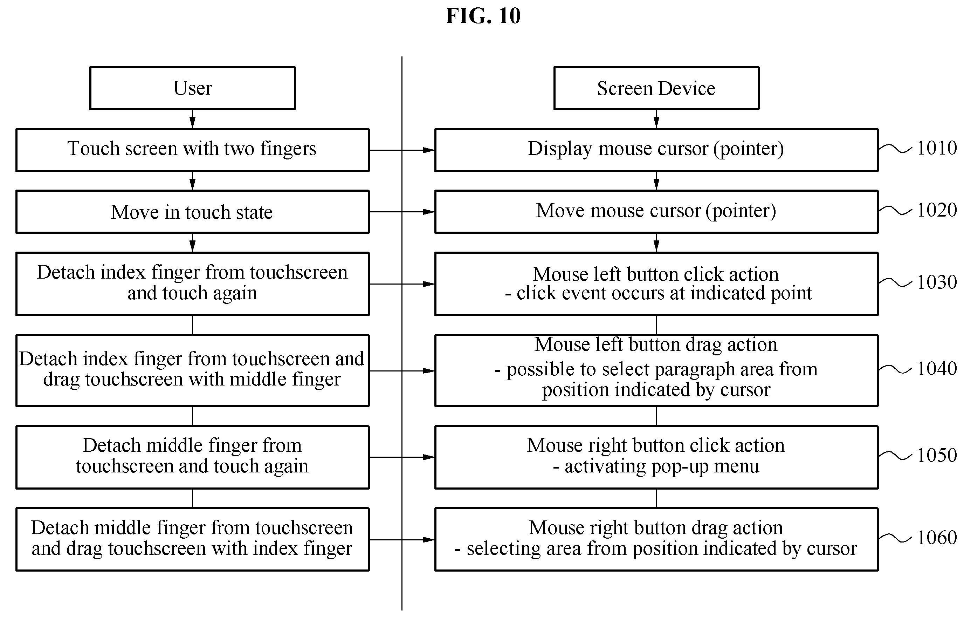

FIG. 10 illustrates operations of a user and a touchscreen apparatus according to an example embodiment.

FIG. 10 illustrates an example of a user operating a touchscreen, for example, a touchscreen operating when the user touches or drags a touchscreen with an index finger and a middle finger of a right hand, as a block diagram. In this example, although the following descriptions of FIG. 10 are provided based on the index finger and the middle finger as an example, other fingers of the user may also be used in lieu of the index finger and the middle finger.

In operation 1010, the user may touch the touchscreen with the index finger and the middle finger. In this example, the touchscreen apparatus may sense touches of the index finger and the middle finger, determine whether the touches are performed simultaneously, and display a cursor located between a point at which the touch is performed by the index finger and a point at which the touch is performed by the middle finger.

In operation 1020, the user may move the index finger and the middle finger while the index finger and the middle finger are in contact with the touchscreen. In this example, when the touchscreen apparatus determines that the touch of the index finger and the touch of the middle finger move without departing from the touchscreen, the cursor may move in response to movements of the touches and a movement of the cursor may be displayed on the touchscreen.

In operation 1030, the user may detach the index finger from the touchscreen and touch the touchscreen with the index finger again in a state in which the touch of the index finger and the touch of the middle finger are in contact with the touchscreen. In this example, when the touchscreen apparatus determines that the touch of the index finger and the touch of the middle finger are in contact with the touchscreen, the touch of the index finger departs from the touchscreen, and a touch is performed by the index finger again, a click event may occur at a point of the cursor.

In operation 1040, the user may touch the touchscreen with the index finger and the middle finger, detach the index finger from the touchscreen, and drag the touchscreen with the middle finger. In this example, when the touchscreen apparatus senses the touches performed on the touchscreen by the index finger and the middle finger, and when the touchscreen apparatus determines that the index finger is detached from the touchscreen and the middle finger drags the touchscreen, an area corresponding to the dragging, starting from a position indicated by the cursor may be displayed to be a selected area as illustrated in FIG. 6.

In operation 1050, the user may touch the touchscreen with the index finger and the middle finger, detach the middle finger from the touchscreen, and touch the touchscreen with the middle finger again. In this example, when the touchscreen apparatus determines that the touch of the index finger and the touch of the middle finger are in contact with the touchscreen, the touch of the middle finger departs from the touchscreen, and a touch is performed by the middle finger again, a pop-up menu may be activated.

In operation 1060, , the user may touch the touchscreen with the index finger and the middle finger, detach the middle finger from the touchscreen, and drag the touchscreen with the index finger. In this example, when the touchscreen apparatus senses the touches performed on the touchscreen by the index finger and the middle finger, and when the touchscreen apparatus determines that the middle finger is detached from the touchscreen and the index finger drags the touchscreen, an area corresponding to the dragging, starting from a position indicated by the cursor may be displayed to be a selected area as illustrated in FIG. 7.

According to example embodiments, it is possible to solve an interface issue of a touchscreen input method through operations between a user and a touchscreen apparatus. It is also possible to improve an issue of a touch input method that depends on an individual sense for each user of a general smart device through a simple utilization of a pop-up menu and an accurate selection based on an accurate pointing function of a cursor on a screen. The foregoing examples may be based on an implementation of a touch interface with an intuitive perspective.

The units described herein may be implemented using hardware components and software components. For example, the hardware components may include microphones, amplifiers, band-pass filters, audio to digital convertors, and processing devices. A processing device may be implemented using one or more hardware device configured to carry out and/or execute program code by performing arithmetical, logical, and input/output operations. The processing device(s) may include a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct and/or configure the processing device to operate as desired, thereby transforming the processing device into a special purpose processor. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A touchscreen apparatus comprising:
a touchscreen;
a touchscreen sensor configured to sense a first touch and a second touch on the touchscreen;
a determiner configured to determine whether the first touch and the second touch are simultaneously performed on the touchscreen; and
a display configured to display a cursor located between a location of the first touch and a location of the second touch when the first touch and the second touch are simultaneously performed on the touchscreen.

2. The touchscreen apparatus of claim 1, wherein the determiner is configured to determine whether the first touch and the second touch move without departing from the touchscreen, and
the display is configured to display the cursor on the touchscreen by moving the cursor in response to movements of the first touch and the second touch when the first touch and the second touch move without departing from the touchscreen.

3. The touchscreen apparatus of claim 1, wherein the determiner is configured to determine whether the first touch and the second touch move without departing from the touchscreen, and
the display is configured to display the cursor on the touchscreen by moving the cursor in response to movements of the first touch and the second touch when the first touch and the second touch move without departing from the touchscreen.

4. The touchscreen apparatus of claim 1, wherein when the first touch is in contact with the touchscreen, the first touch is located leftward relative to the second touch,
the determiner is configured to determine whether the first touch and the second touch are in contact with the touchscreen, the second touch departs from the touch screen, and the second touch comes into contact with the touchscreen again, and
the touchscreen apparatus further comprises a controller configured to activate a pop-up menu when the first touch and the second touch are in contact with the touchscreen, the second touch departs from the touch screen, and comes into in contact with the touchscreen again.

5. The touchscreen apparatus of claim 1, wherein when the first touch is in contact with the touchscreen, the first touch is located leftward relative to the second touch,
the determiner is configured to determine whether the second touch is dragged on the touchscreen in a state in which the first touch departs from the touchscreen after contacting the touchscreen, and
the display is configured to display an area corresponding to the dragging, starting from a position indicated by a cursor as a selected area based on a first display method when the second touch is dragged on the touchscreen in the state in which the first touch departs from the touchscreen.

6. The touchscreen apparatus of claim 5, wherein the determiner is configured to determine whether the first touch is dragged on the touchscreen in a state in which the second touch departs from the touchscreen after contacting the touchscreen, and
the display is configured to display an area corresponding to the dragging, starting from a position indicated by a cursor as a selected area based on a second display method when the first touch is dragged on the touchscreen in the state in which the second touch departs from the touchscreen.

7. The touchscreen apparatus of claim 6, wherein the first display method differs from the second display method.

8. A touchscreen input method comprising:
sensing a first touch on a first point and a second touch on a second point simultaneously performed on the touchscreen; and
displaying a cursor located between the first point and the second point when the first touch and the second touch are sensed simultaneously.

9. The method of claim 8, further comprising:
determining whether the first touch and the second touch move without departing from the touchscreen; and
displaying the cursor on the touchscreen by moving the cursor in response to movements of the first touch and the second touch when the first touch and the second touch move without departing from the touchscreen.

10. The method of claim 8, further comprising:
determining whether the first touch and the second touch are in contact with the touchscreen, the second touch departs from the touch screen, and comes into contact with the touchscreen again; and
performing a predetermined operation when the first touch and the second touch are in contact with the touchscreen, the second touch departs from the touch screen, and comes into contact with the touchscreen again.

11. The method of claim 10, wherein the performing of the predetermined operation comprises allowing a click event to occur at a point of the cursor when the first touch is located leftward relative to the second touch.

12. The method of claim 10, wherein the performing of the predetermined operation comprises activating a pop-up menu when the first touch is located rightward relative to the second touch.

13. The method of claim 10, further comprising:
determining whether the second touch is dragged on the touchscreen in a state in which the first touch departs from the touchscreen after contacting the touchscreen; and
displaying an area corresponding to the dragging, starting from a position indicated by a cursor as a selected area based on a first display method when the second touch is dragged on the touchscreen in the state in which the first touch departs from the touchscreen,
wherein when the first touch is in contact with the touchscreen, the first touch is located leftward relative to the second touch.

14. The method of claim 13, further comprising:
determining whether the first touch is dragged on the touchscreen in a state in which the second touch departs from the touchscreen after contacting the touchscreen; and
displaying an area corresponding to the dragging, starting from a position indicated by a cursor as a selected area based on a second display method when the first touch is dragged on the touchscreen in the state in which the second touch departs from the touchscreen.

15. The method of claim 14, wherein the first display method differs from the second display method.

16. A non-transitory computer-readable storage medium storing instructions to cause a computer to perform the method of any one of claims 1 though 8.
